# EUROPEAN PATENT APPLICATION

(11) **EP 4 773 037 A1**
(43) Date of publication of application: **08.07.2026**
(21) Application number: 26150063.1
(22) Date of filing: 02.01.2026
(51) Int. Cl.: G06F 40/56, G06F 8/30, G06N 3/0475

(54) **TRIGGER-BASED GRAMMAR ENFORCEMENT IN LLM GENERATIONS**

(30) Priority: 02.01.2025 US 202519007828
(71) Applicant: SAP SE, 69190 Walldorf (DE)
(72) Inventor: Kunz, David, 69190 Walldorf (DE)
(74) Representative: Müller-Boré & Partner Patentanwälte PartG mbB

(57) **Abstract**

In an example embodiment, a mechanism is provided to allow an LLM to generate multiple text blocks in which different grammars are strictly enforced with a single invocation. This mechanism defines a set of trigger tokens and end tokens. When a trigger token is encountered by the LLM, a strict grammar referenced by the trigger token is begun to be enforced and this enforcement ends when an end token is encountered. Between the time an end token is encountered, and another trigger token is encountered, no grammar is strictly enforced. By including multiple types of such trigger token/end token pairs, it becomes possible for the LLM to generate texts having different strictly enforced grammars in a single invocation.

## Description

### TECHNICAL FIELD

This document generally relates to computer systems. More specifically, this document relates to use of large language models.

### BACKGROUND

A large language model (LLM) refers to an artificial intelligence (AI) system that has been trained on an extensive dataset to understand and generate human language. These models are designed to process and comprehend natural language in a way that allows them to answer questions, engage in conversations, generate text, and perform various language-related tasks.

### BRIEF DESCRIPTION OF DRAWINGS

The present disclosure is illustrated by way of example and not limitation in the figures of the accompanying drawings, in which like references indicate similar elements.
Figure 1 is a block diagram illustrating a system for automatically generating a CDS model object from natural language text, in accordance with an example embodiment.
Figure 2 is a flow diagram illustrating a method for generating text in an LLM, in accordance with an example embodiment.
Figure 3 is a block diagram illustrating an architecture of software, which can be installed on any one or more of the devices described above.
Figure 4 illustrates a diagrammatic representation of a machine in the form of a computer system within which a set of instructions may be executed for causing the machine to perform any one or more of the methodologies discussed herein, according to an example embodiment.

### DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

LLMs are highly capable of generating text and even computer code (to be compiled into running software). LLMs, however, are limited when it comes to producing output in a fixed grammar, such as those needed for compilable computer code.

Certain types of compilable computer code may be even more difficult for an LLM to generate correctly, due to a number of factors, such as the compilable computer code type being one that is proprietary or at least partially proprietary (and thus in a format that is difficult to train an LLM on), and the compilable computer code type being one that is difficult to change once it is generated.

One solution for these issues with compilable computer code but also for scenarios that do not involve compilable computer code is to use an LLM to generate an intermediate representation. The intermediate representation can then be fed into a separate component that uses it to generate a final output, such as compilable computer code. This compiling may involve, for example, sanitizing the intermediate representation, enhancing the intermediate representation, and formatting the intermediate file, as well as modifying the intermediate representation based on a feature set.

Despite the use of such intermediate representations, there is still a technical challenge in ensuring that the intermediate representations are generated in a grammar that can be accurately turned into compilable computer code. This issue applies to generated configuration blocks (e.g., JavaScript Object Notation code) or code blocks (e.g., JavaScript).

One solution would be to rigorously enforce a predefined grammar by modifying the probabilities for upcoming tokens. Specifically, LLMs work by having a neural network generate text token by token by, at each step, assigning a probability to each possible token to be generated and then selecting one of those tokens based on the probabilities. It should be noted that while it is possible for the LLM to simply select the token with the highest probability (e.g., the token with the likeliest possibility of being a desirable token after the previously generated token, also known as a greedy algorithm), in many cases the selection process is more complicated than that. Using a greedy algorithm would make the output deterministic; namely, that the same input conditions would always cause the same output. That is not desirable in an LLM since in many cases it is more desirable to have more variety in the output, even when presented with the same input, to allow for, for example, a user to repeat the same prompt and obtain a different answer. Thus, to address this, another mechanism to select a token that respects the probabilities but does not follow them exactly can be instructed. For example, at each step the next token can be selected randomly but weighted based on the probabilities of the possible tokens. Other modifications, such as using temperature hyperparameters to control the weights, and top_p or top-K to control how many of the highest probable tokens are considered for selection, can be used.

Nevertheless, no matter how the selection process is performed, the steps of generating probabilities for possible tokens for the next token and then selecting one of those possible tokens are repeated over and over again until the entire text has been generated. The generated text can be forced to use a predefined grammar by assigning the probability for any token that does not match the predefined grammar to zero or null, essentially preventing the LLM from generating text that does not match the predefined grammar.

The problem with such a solution is that it is limited to only a single predefined grammar per invocation. It does not allow for a single invocation to generate text in multiple different grammars, for example one portion of the text being in JSON format and another being in Core Data Service (CDS) format. There are also instances where free text (text not required to be compliant with one of the predefined grammars) is generated in the same document as text that is part of a strictly defined grammar.

In an example embodiment, a mechanism is provided to allow an LLM to generate multiple text blocks in which different grammars are strictly enforced with a single invocation. This mechanism defines a set of trigger tokens and end tokens. When a trigger token is encountered by the LLM, a strict grammar referenced by the trigger token starts to be enforced and this enforcement ends when an end token is encountered. Between the time an end token is encountered, and another trigger token is encountered, no grammar is strictly enforced. By including multiple types of such trigger token/end token pairs, it becomes possible for the LLM to generate texts having different strictly enforced grammars in a single invocation.

The text generated by the process can be, for example, an intermediate representation that will subsequently be turned into a final representation by a programmatic component. This example will be discussed throughout this document. However, it is important to note that there is no requirement that the generated text be an intermediate representation and embodiments are foreseen where the generated text is itself the final representation.

As to the process why which the multiple grammars are enforced, during these strict enforcements, the probability for any token that does not match the predefined grammar for the corresponding trigger token is set to zero or null. This essentially allows for an LLM to switch the nullification mechanism to a different grammar on the fly, within a single invocation. It should be noted that while this disclosure will describe the use of probabilities to enforce the grammars, there is no requirement that the parameters used to enforce the grammars be probabilities. Implementations are possible where other types of parameters can be used to enforce the grammars. These parameters may include, for example, temperature, frequency penalty, presence penalty, and max tokens.

Temperatures refers to a hyperparameter that controls the randomness or creativity of the model's generated response. Frequency penalty is a hyperparameter used to control how much the model penalizes the repetition of words or phrases in its output. Presence penalty discourages the model from using any word that has already appeared at all in the text, regardless of how many times it has been used. Max tokens is a maximum number of tokens that the model can process or generate in a single prompt or output.

In an example embodiment, the trigger tokens and end tokens are implemented as markdown code fences. A markdown document is a plain text file that uses a lightweight markup language, such as Markdown, to format text. It allows for formatted documents to be written using simply syntax, which then can be converted into other formats. A markdown code fence is a specific way to include blocks of code in a markdown document. Specifically, by using a repeating character, such as three backticks (‴) or three rildes (~~~), a block of code can be delineated that clearly separates the code from the rest of the text. For example, the markdown code fence for a JSON file might be a ʺ‴JSONʺ line to delineate the beginning of a JSON block and a ʺ‴ʺ line to delineate the end of the JSON block.

Cloud computing can be described as Internet-based computing that provides shared computer processing resources, and data to computers and other devices on demand. Users can establish respective sessions, during which processing resources, and bandwidth are consumed. During a session, for example, a user is provided on-demand access to a shared pool of configurable computing resources (e.g., computer networks, servers, storage, applications, and services). The computing resources can be provisioned and released (e.g., scaled) to meet user demand. An example cloud platform includes SAP Cloud Application Platform (CAP), from SAP SE of Walldorf, Germany. A cloud platform may run a data model infrastructure, where data models can be created and run.

One example of such a data model infrastructure is a CDS from SAP SE of Walldorf, Germany. CDS enables service definitions and data models to be declaratively captured in plain object notations. CDS models are typically written in CDS language and then compiled. In an example embodiment, the aforementioned techniques are used to generate a CDS model (which is compilable computer code) by first using an LLM to generate an intermediate representation, such as a JavaScript Object Notation (JSON) file or an Extensible Markup Language (XML) file, and then passing the intermediate representation through a programmatic component to generate the final CDS computer code.

LLMs used to generate information are generally referred to as Generative Artificial Intelligence (GAI) models. A GAI model may be implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance.

The bidirectional encoder may be implemented as a Bidirectional Long Short-Term Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) that are designed to overcome the vanishing gradient problem in traditional RNNs, which can make it difficult to learn long-term dependencies in sequential data.

LSTMs include a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At each time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model, known as a transformer, to language modelling. This is in contrast to prior art solutions that looked at a text sequence either from left to right or combined left to right and right to left. A bidirectionally trained language model has a deeper sense of language context and flow than single-direction language models.

More specifically, the transformer encoder reads the entire sequence of information at once, and thus is considered to be bidirectional (although one could argue that it is, in reality, non-directional). This characteristic allows the model to learn the context of a piece of information based on all of its surroundings.

In other example embodiments, a generative adversarial network (GAN) embodiment may be used. GAN is a supervised machine learning model that has two submodels: a generator model that is trained to generate new examples, and a discriminator model that tries to classify examples as either real or generated. The two models are trained together in an adversarial manner (using a zero sum game, according to game theory), until the discriminator model is fooled roughly half the time which means that the generator model is generating plausible examples.

The generator model takes a fixed-length random vector as input and generates a sample in the domain in question. The vector is drawn randomly from a Gaussian distribution, and the vector is used to seed the generative process. After training, points in this multidimensional vector space will correspond to points in the problem domain, forming a compressed representation of the data distribution. This vector space is referred to as a latent space, or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, although a clever property of the GAN architecture is that the training of the generative model is framed as a supervised learning problem.

The two models, the generator and the discriminator, are trained together. The generator generates a batch of samples, and these, along with real examples from the domain, are provided to the discriminator and classified as real or fake.

The discriminator is then updated to get better at discriminating real and fake samples in the next round, and importantly, the generator is updated based on how well, or not, the generated samples fooled the discriminator.

In another example embodiment, the GAI model is a Variational Auto-Encoders (VAEs) model. VAEs comprise an encoder network that compresses the input data into a lower-dimensional representation, called a latent code, and a decoder network that generates new data from the latent code. In either case, the GAI model contains a generative classifier, which can be implemented as, for example, a naive Bayes classifier.

The present solution works with any type of GAI model, although an implementation that specifically is used with a GPT model will be described.

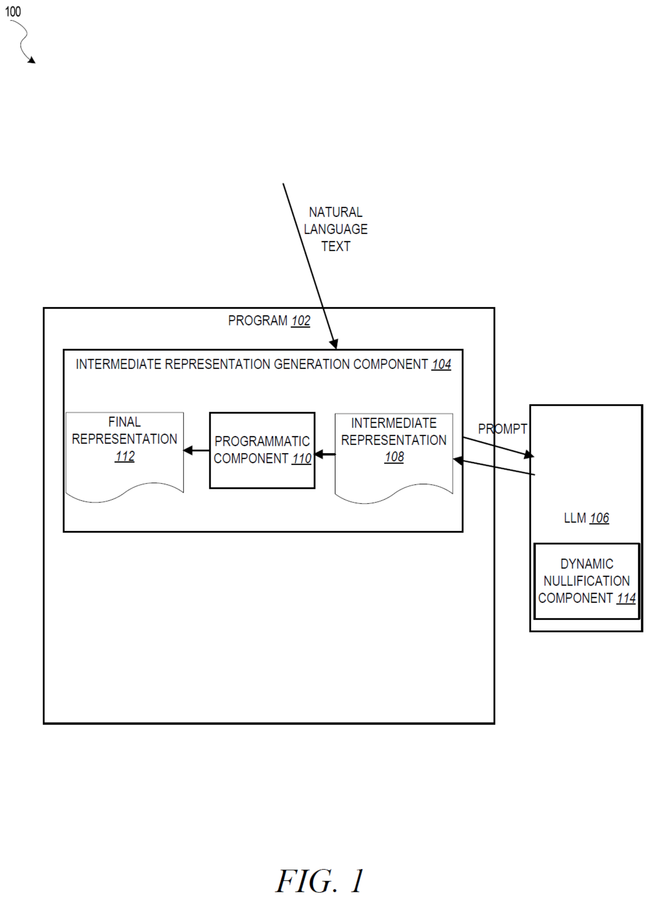

Figure 1 is a block diagram illustrating a system 100 for automatically generating a CDS model object from natural language text, in accordance with an example embodiment. Here, a program 102 contains an Intermediate representation generation component 104 that receives natural language text from a user. The Intermediate representation generation component 104 appends a system message to the natural language text and sends it as a prompt to a LLM 106. The system message will be described in more detail below, but generally instructs the LLM to generate the creative portions of the desired CDS computer code (the portions that will not or cannot be generated programmatically). In an example embodiment, the system message instructs the LLM 106 to generate an intermediate representation 108 in a particular protocol, such as JSON. Upon receipt of this intermediate representation 108, a programmatic component 110 performs one or more programmatic functions on the intermediate representation 108 and converts it to a final representation 112, which is compilable computer code (here being a CDS model).

In an example embodiment, the programmatic component 110 is designed to allow for minimal degrees of freedom in the intermediate representation 108. Degrees of freedom in this context mean the number of independent ways the LLM 106 can generate the intermediate representation 108 without impeding any of the constraints placed upon it. Degrees of freedom can also be thought of as the number of independent variables/parameters in a calculation performed by a machine learning model, such as an LLM. Thus, in this case it is desirable for the programmatic component 110 to be created in such a way that it is making as many of the "choices" that the LLM 106 would otherwise make in the code generation process as possible, reducing the number of variables the LLM 106 needs to account for, and ultimately improving the reliability of the final representation 112, since the programmatic component 110 is better in solving deterministic subtasks than creative ones, while the LLM 106 is better at solving creative subtasks than deterministic ones. Thus, during the design of the system 100, a programmer/user/administrator may determine which features need not be used in the LLM portion of the generation process and may design the programmatic component 110 to perform those features.

Meanwhile, the LLM 106 is designed in an internal dynamic nullification component 114. The dynamic nullification component 114 acts to monitor tokens being generated by the LLM 106 in response to the prompt to look for one or more trigger tokens. Each trigger token may correspond to a different unique grammar. Once a trigger token is generated by the LLM 106, any subsequent tokens being considered for generation will be checked for compliance with the unique grammar corresponding to the specific trigger token that was detected, until an end token is generated. If any of these subsequent tokens being considered for generation are not in compliance with the unique grammar corresponding to the specific trigger token that was detected, then they will have their probabilities set to null (or the equivalent thereof), thus preventing them from being chosen as generated tokens.

It should be noted that the meaning of "in compliance with the unique grammar" needs to be understood in the context of still allowing for the generation of an ending token. In other words, while a particular grammar may itself not permit an ending token, or at least an ending token in a form that will signify to the LLM an ending of a code block for purposes of this disclosure, the unique grammar will include the possibility of generating such an ending token. Thus, for example, even though the JSON grammar does not provide for the ability to include a ‴ line (representing an ending token), the grammar that will be strictly enforced by the dynamic nullification component 114 will actually be the JSON grammar plus the ending token. This can be accomplished in a number of different ways. In some example embodiments, the grammar rules for the individual grammars themselves can be modified to include the ending token. In other example embodiments, the rules of the dynamic nullification component 114 are set up to allow both tokens compliant with the grammar and ending tokens, even when in "strict compliance" mode.

The following is an example text generation including code blocks with multiple grammars being enforced in a single invocation, in accordance with an example embodiment. Each phase represents the selection of a different token or tokens to generate as part of the output text, added on to the text generated in the previous phase. For ease of reading, the previously generated text is depicted in italics and the newly generated text is depicted in bold. Thus, in a first phase:
**The following is a configuration on how to set up a service**
Then in a second phase:
*The following is a configuration on how to set up a service*
‴ **json**
Notably, the token ‴json is a trigger token for the JSON grammar. The dynamic nullification component 114 then detects this trigger token and enters a strict compliance mode where all tokens that are either not in compliance with the JSON grammar or are an end token are assigned a probability of null, resulting in the text generated in this mode being compliant with the JSON grammar or an end token.
Thus, in a third phase:
*The following is a configuration on how to set up a service* 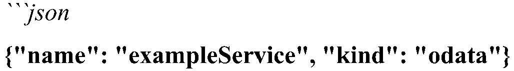 Note that the text " {"name": "exampleService", "kind": "odata"}" is all compliant with the JSON grammar.
In a fourth phase:
*The following is a configuration on how to set up a service* 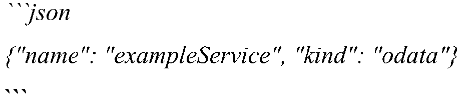 Note the generation of the end token, which signifies to the dynamic nullification component 114 that the strict compliance mode can be turned off, resulting in further token selection to be made without regard for compliance with a grammar.
In a fifth phase:
*The following is a configuration on how to set up a service* 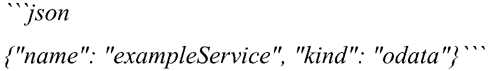 It allows you to create an instance of it with
Note that this new text is not in compliance with the JSON grammar or the JavaScript (JS) grammar.
In a sixth phase:
*The following is a configuration on how to set up a service* 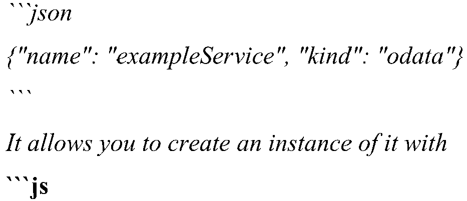 Note the generation of a new trigger token, corresponding to the JavaScript grammar. The dynamic nullification component 114 then enters a strict compliance mode where all tokens that are either not in compliance with the JavaScript grammar or are an end token are assigned a probability of null, resulting in the text generated in this mode being compliant with the JavaScript grammar or an end token.
In a seventh phase:
*The following is a configuration on how to set up a service* 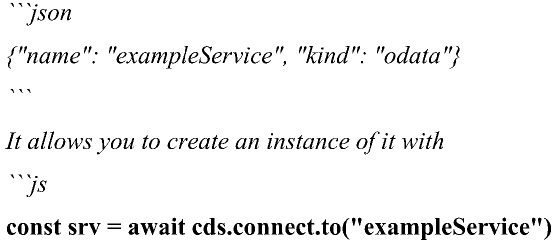 Note that the text (const srv = away cds.connect.to("exampleService")) is compliant with the JavaScript grammar.
Finally, in an eighth phase:
*The following is a configuration on how to set up a service* 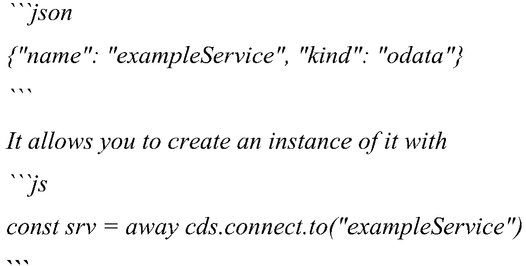 Note the generation of the end token, which signifies to the dynamic nullification component 114 that the strict compliance mode can be turned off, resulting in further token selection to be made without regard for compliance with a grammar.

The above can represent an intermediate representation 108, which can then be passed to a programmatic component 110 to generate a final representation 112. As mentioned earlier, it should be noted that it is not necessary that the generated text from the LLM 106, that is generated using the above techniques and the dynamic nullification component 114, actually be an intermediate representation. Embodiments are foreseen where the generated text is itself a final representation.

In view of the disclosure above, various examples are set forth below. It should be noted that one or more features of an example, taken in isolation or combination, should be considered within the disclosure of this application.

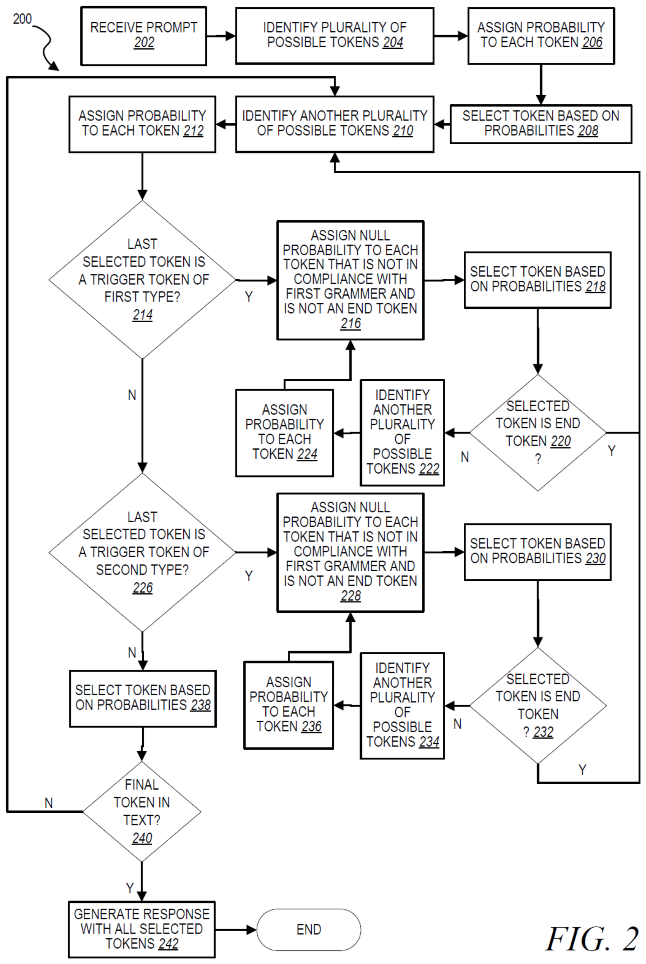

Figure 2 is a flow diagram illustrating a method 200 for generating text in an LLM, in accordance with an example embodiment. At operation 202, a prompt is received. At operation 204, a plurality of possible tokens are identified. At operation 206, a probability is assigned to each token in the plurality of possible tokens indicating a likelihood that the corresponding token should be selected as a next token in the text. At operation 208, a token from the plurality of tokens is selected based on the probability;

Then, a loop is begun to generate tokens responsive to the prompt. Each iteration of the loop generates another token, until the text is completely generated. The beginning of the loop uses an internal dynamic nullification component 114 to determine whether the last selected token was a trigger token, and then if so, it assigns a null value to the probability for any possible token for the next token that is not in compliance with a grammar corresponding to the trigger token or is an end token. Thus, at operation 210, another plurality of possible tokens are identified. At operation 212, a probability is assigned to each token in another plurality of tokens, indicating a likelihood that the corresponding token should be selected as the next token in the text. At operation 214, it is determined if the last selected token is a trigger token of a first type. If so, then a loop where the first grammar is enforced is begun, and at operation 216, a null probability value is assigned to any token in another plurality of possible tokens that is not in compliance with a first grammar uniquely associated with the first type and is not an end token. At operation 218, a token from another plurality of possible tokens is selected based on the probabilities associated to the other plurality of possible tokens. At operation 220, it is determined if the selected token is an end token. If so, then the loop where the first grammar is enforced ends and the method 200 returns to operation 210. If not, then at operation 222 another plurality of possible tokens is identified; and, at operation 224 a probability is assigned to each token. Then, the loop returns to operation 216 where the first grammar continues to be enforced.

If at operation 214, it was determined that the last selected token is not a trigger token of the first type, then at operation 226 it is determined if the last selected token is a trigger token of a second type. If so, then a loop where the second grammar is enforced is begun, and at operation 228 a null probability value is assigned to any token in the other plurality of possible tokens that is not in compliance with a second grammar uniquely associated with the first type and is not an end token. At operation 230, a token from the other plurality of possible tokens is selected based on the probabilities associated to the other plurality of possible tokens. At operation 232, it is determined if the selected token is an end token. If so, then the loop where the second grammar is enforced ends and the method 200 returns to operation 210. If not, then at operation 234 another plurality of possible tokens is identified and at operation 236, a probability is assigned to each token. Then, the loop returns to operation 228 where the first grammar continues to be enforced.

It should be noted that this figure depicts an embodiment where there are two possible trigger token types, each corresponding to a different grammar. If there are more than two different grammar types, then there would be a corresponding number of different trigger token types, and there would be a similar set of operations like operations 226-236 for each of those other trigger token types.

Nevertheless, if the last selected token is not a trigger token and the method 200 is not in a loop where a grammar is being enforced, then at operation 238, the token is simply selected based on probabilities. This is a time where freeform text can be generated, as no grammar is being enforced. At operation 240, it is determined whether or not this is the final token in the text. If so, then the method 200 moves to operation 242. If not, then the method 200 loops back to operation 210 to begin generating another token.

Determination that the token is the final token in the text can be performed in a number of ways. In some example embodiments, the determination actually takes place in combination with another round of identification of another plurality of possible tokens and assignment of probabilities. If, for example, no possible tokens are identified, or the probabilities of the possible tokens are all zero, then this would indicate that no further tokens should be generated. Alternatively, this determination may include the selection process, where perhaps there is a situation where there are possible tokens with non-zero probabilities, but the selection process chooses not to select one of them.

Nevertheless, once the final token is determined, then at operation 242 a response to the prompt is generated that includes all of the selected tokens. Notably this is a single response that includes portions where two (or more) separate grammars have been enforced.

In view of the disclosure above, various examples are set forth below. It should be noted that one or more features of an example, taken in isolation or combination, should be considered within the disclosure of this application.

Example 1 is a system comprising: at least one hardware processor; a computer-readable medium storing instructions that, when executed by the at least one hardware processor, cause the at least one hardware processor to perform operations comprising: receiving, at a Large Language Model (LLM), a prompt; assigning probabilities to a first plurality of different possible tokens based on the prompt; selecting a first token based on values for one or more parameters for the first plurality of different possible tokens; determining that the first token is not a trigger token; assigning values to one or more parameters of a second plurality of different possible tokens based on the prompt and based on the first token; selecting a second token based on the values for the one or more parameters for the second plurality of different possible tokens; determining that the second token is a trigger token of a first type; assigning values to one or more parameters of a third plurality of different possible tokens based on the prompt and based on the second token; based on the determination that the second token is the trigger token of the first type, assigning a specific value to a parameter of any tokens in the third plurality of different possible tokens that are not in compliance with a first grammar uniquely associated with the first type and that also are not an end token; selecting a third token based on the values for the one or more parameters of the third plurality of different possible tokens; and returning the first token, second token, and third token as a response to the prompt.

In Example 2, the subject matter of Example 1 includes, wherein the one or more parameters comprise temperature.

In Example 3, the subject matter of Examples 1-2 includes, wherein the one or more parameters comprise a frequency penalty.

In Example 4, the subject matter of Examples 1-3 includes, wherein the one or more parameters comprise a presence penalty.

In Example 5, the subject matter of Examples 1-4 includes, wherein the one or more parameters comprise maximum tokens.

In Example 6, the subject matter of Examples 1-5 includes, wherein the one or more parameters comprise probability, and wherein the specific value is a null probability value.

In Example 7, the subject matter of Example 6 includes, wherein the operations further comprise: assigning probabilities to a fourth plurality of different possible tokens based on the prompt and based on the third token; assigning a null probability value to any tokens in the third plurality of different possible tokens that are not in compliance with the first grammar and that also are not an end token; selecting a fourth token based on the assigned probabilities for the fourth plurality of different possible tokens; determining that the fourth token is an end token; based on the determination that the second token is the end token, assigning probabilities to a fifth plurality of different possible tokens based on the prompt and based on the second token without determining compliance of any tokens with the first grammar; and wherein the generating comprises generating the first token, second token, third token, fourth token, and fifth token as a response to the prompt.

In Example 8, the subject matter of Example 7 includes, wherein the operations further comprise: assigning probabilities to a sixth plurality of different possible tokens based on the prompt and based on the fifth token; selecting a sixth token based on the assigned probabilities for the sixth plurality of different possible tokens; determining that the sixth token is a trigger token of a second type; assigning probabilities to a seventh plurality of different possible tokens based on the prompt and based on the sixth token; based on the determination that the sixth token is the trigger token of the second type, assigning a null probability value to any tokens in the seventh plurality of different possible tokens that are not in compliance with a second grammar uniquely associated with the second type and that also are not an end token; selecting a seventh token based on the assigned probabilities for the seventh plurality of different possible tokens; and wherein the generating comprises generating the first token, second token, third token, fourth token, fifth token, sixth token, and seventh token as a response to the prompt.

In Example 9, the subject matter of Examples 6-8 includes, wherein the response is an intermediate representation and the operations further comprise: passing the intermediate representation into a programmatic component to generate a final representation, the programmatic component validating the intermediate representation and converting the intermediate representation into the final representation.

In Example 10, the subject matter of Example 9 includes, wherein the final representation is compilable computer code.

In Example 11, the subject matter of Examples 9-10 includes, wherein the compilable computer code is in a format that is at least partially proprietary.

In Example 12, the subject matter of Examples 5-11 includes, wherein the selecting the first token, the selecting the second token, and the selecting the third token are all performed in a non-deterministic manner.

Example 13 is a method comprising: receiving, at a Large Language Model (LLM), a prompt; assigning probabilities to a first plurality of different possible tokens based on the prompt; selecting a first token based on values for one or more parameters for the first plurality of different possible tokens; determining that the first token is not a trigger token; assigning values to one or more parameters of a second plurality of different possible tokens based on the prompt and based on the first token; selecting a second token based on the values for the one or more parameters for the second plurality of different possible tokens; determining that the second token is a trigger token of a first type; assigning values to one or more parameters of a third plurality of different possible tokens based on the prompt and based on the second token; based on the determination that the second token is the trigger token of the first type, assigning a specific value to a parameter of any tokens in the third plurality of different possible tokens that are not in compliance with a first grammar uniquely associated with the first type and that also are not an end token; selecting a third token based on the values for the one or more parameters of the third plurality of different possible tokens; and returning the first token, second token, and third token as a response to the prompt.

In Example 14, the subject matter of Example 13 includes, wherein the one or more parameters comprise probability, and wherein the specific value is a null probability value.

In Example 15, the subject matter of Example 14 includes, assigning probabilities to a fourth plurality of different possible tokens based on the prompt and based on the third token; assigning a null probability value to any tokens in the third plurality of different possible tokens that are not in compliance with the first grammar and that also are not an end token; selecting a fourth token based on the assigned probabilities for the fourth plurality of different possible tokens; determining that the fourth token is an end token; based on the determination that the second token is the end token, assigning probabilities to a fifth plurality of different possible tokens based on the prompt and based on the second token without determining compliance of any tokens with the first grammar; and wherein the generating comprises generating the first token, second token, third token, fourth token, and fifth token as a response to the prompt.

In Example 16, the subject matter of Example 15 includes, assigning probabilities to a sixth plurality of different possible tokens based on the prompt and based on the fifth token; selecting a sixth token based on the assigned probabilities for the sixth plurality of different possible tokens; determining that the sixth token is a trigger token of a second type; assigning probabilities to a seventh plurality of different possible tokens based on the prompt and based on the sixth token; based on the determination that the sixth token is the trigger token of the second type, assigning a null probability value to any tokens in the seventh plurality of different possible tokens that are not in compliance with a second grammar uniquely associated with the second type and that also are not an end token; selecting a seventh token based on the assigned probabilities for the seventh plurality of different possible tokens; and wherein the generating comprises generating the first token, second token, third token, fourth token, fifth token, sixth token, and seventh token as a response to the prompt.

In Example 17, the subject matter of Examples 14-16 includes, wherein the response is an intermediate representation and the method further comprises: passing the intermediate representation into a programmatic component to generate a final representation, the programmatic component validating the intermediate representation; and converting the intermediate representation into the final representation.

In Example 18, the subject matter of Example 17 includes, wherein the final representation is compilable computer code.

Example 19 is a non-transitory machine-readable medium storing instructions which, when executed by one or more processors, cause the one or more processors to perform operations comprising: receiving, at a Large Language Model (LLM), a prompt; assigning probabilities to a first plurality of different possible tokens based on the prompt; selecting a first token based on values for one or more parameters for the first plurality of different possible tokens; determining that the first token is not a trigger token; assigning values to one or more parameters of a second plurality of different possible tokens based on the prompt and based on the first token; selecting a second token based on the values for the one or more parameters for the second plurality of different possible tokens; determining that the second token is a trigger token of a first type; assigning values to one or more parameters of a third plurality of different possible tokens based on the prompt and based on the second token; based on the determination that the second token is the trigger token of the first type, assigning a specific value to a parameter of any tokens in the third plurality of different possible tokens that are not in compliance with a first grammar uniquely associated with the first type and that also are not an end token; selecting a third token based on the values for the one or more parameters of the third plurality of different possible tokens; and returning the first token, second token, and third token as a response to the prompt.

In Example 20, the subject matter of Example 19 includes, wherein the one or more parameters comprise probability, and wherein the specific value is a null probability value.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.
Example 24 is a method to implement of any of Examples 1-20.

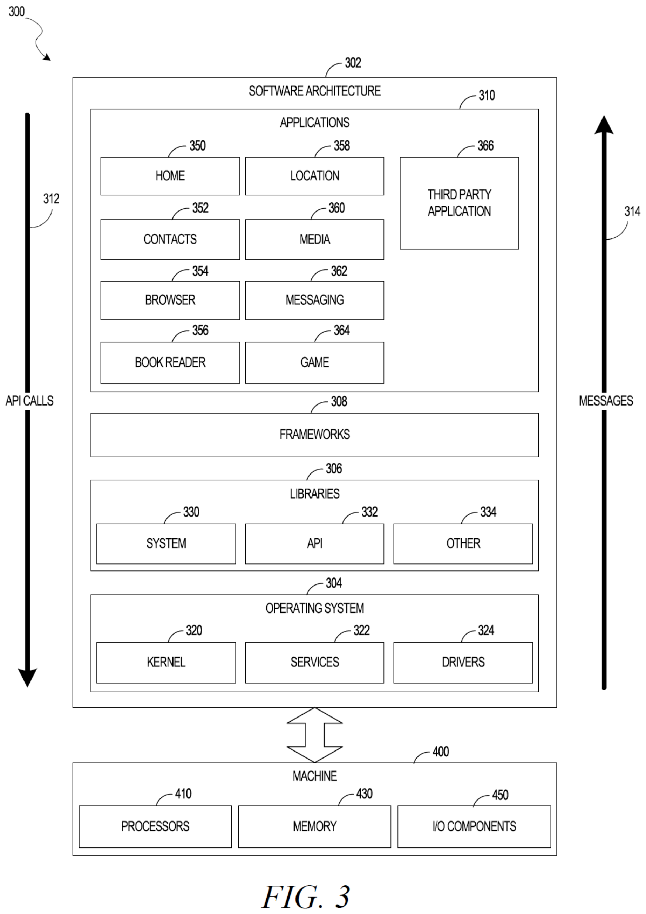

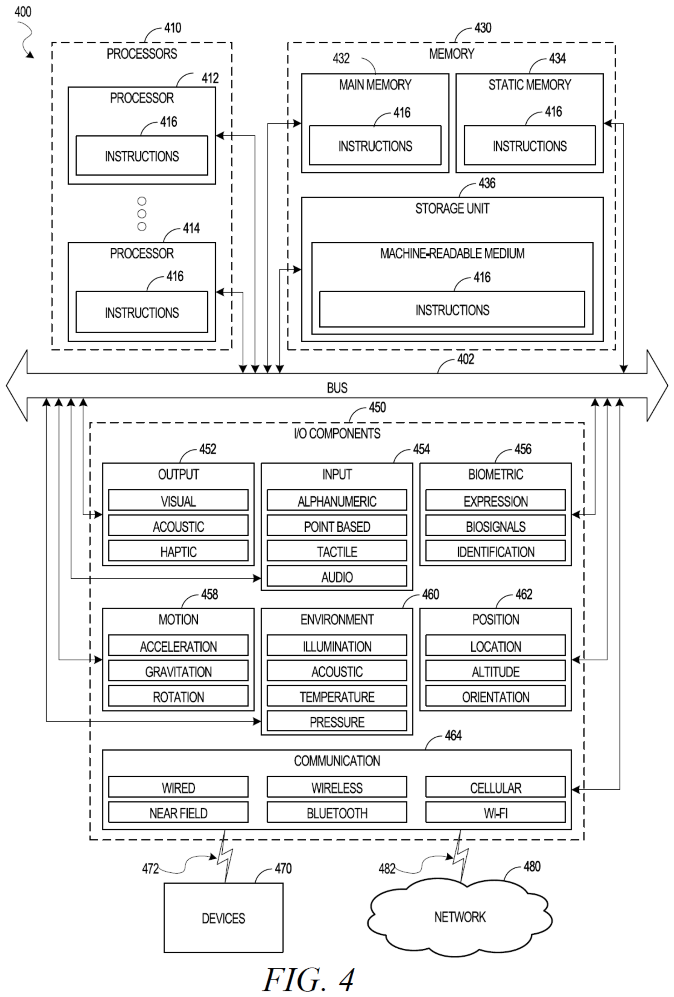

Figure 3 is a block diagram 300 illustrating a software architecture 302, which can be installed on any one or more of the devices described above. Figure 3 is merely a non-limiting example of a software architecture, and it will be appreciated that many other architectures can be implemented to facilitate the functionality described herein. In various embodiments, the software architecture 302 is implemented by hardware such as a machine 400 of Figure 4 that includes processors 410, memory 430, and input/output (I/O) components 450. In this example architecture, the software architecture 302 can be conceptualized as a stack of layers where each layer may provide a particular functionality. For example, the software architecture 302 includes layers such as an operating system 304, libraries 306, frameworks 308, and applications 310. Operationally, the applications 310 invoke API calls 312 through the software stack and receive messages 314 in response to the API calls 312, consistent with some embodiments.

In various implementations, the operating system 304 manages hardware resources and provides common services. The operating system 304 includes, for example, a kernel 320, services 322, and drivers 324. The kernel 320 acts as an abstraction layer between the hardware and the other software layers, consistent with some embodiments. For example, the kernel 320 provides memory management, processor management (e.g., scheduling), component management, networking, and security settings, among other functionalities. The services 322 can provide other common services for the other software layers. The drivers 324 are responsible for controlling or interfacing with the underlying hardware, according to some embodiments. For instance, the drivers 324 can include display drivers, camera drivers, BLUETOOTH^{®} or BLUETOOTH^{®} Low-Energy drivers, flash memory drivers, serial communication drivers (e.g., Universal Serial Bus [USB] drivers), Wi-Fi^{®} drivers, audio drivers, power management drivers, and so forth.

In some embodiments, the libraries 306 provide a low-level common infrastructure utilized by the applications 310. The libraries 306 can include system libraries 330 (e.g., C standard library) that can provide functions such as memory allocation functions, string manipulation functions, mathematic functions, and the like. In addition, the libraries 306 can include API libraries 332 such as media libraries (e.g., libraries to support presentation and manipulation of various media formats such as Moving Picture Experts Group-4 [MPEG4], Advanced Video Coding [H.264 or AVC], Moving Picture Experts Group Layer-3 [MP3], Advanced Audio Coding [AAC], Adaptive Multi-Rate [AMR] audio codec, Joint Photographic Experts Group [JPEG or JPG], or Portable Network Graphics [PNG]), graphics libraries (e.g., an OpenGL framework used to render in two dimensions [2D] and three dimensions [3D] in a graphic context on a display), database libraries (e.g., SQLite to provide various relational database functions), web libraries (e.g., WebKit to provide web browsing functionality), and the like. The libraries 306 can also include a wide variety of other libraries 334 to provide many other APIs to the applications 310.

The frameworks 308 provide a high-level common infrastructure that can be utilized by the applications 310, according to some embodiments. For example, the frameworks 308 provide various GUI functions, high-level resource management, high-level location services, and so forth. The frameworks 308 can provide a broad spectrum of other APIs that can be utilized by the applications 310, some of which may be specific to a particular operating system 304 or platform.

In an example embodiment, the applications 310 include a home application 350, a contacts application 352, a browser application 354, a book reader application 356, a location application 358, a media application 360, a messaging application 362, a game application 364, and a broad assortment of other applications, such as a third-party application 366. According to some embodiments, the applications 310 are programs that execute functions defined in the programs. Various programming languages can be employed to create one or more of the applications 310, structured in a variety of manners, such as object-oriented programming languages (e.g., Objective-C, Java, or C++) or procedural programming languages (e.g., C or assembly language). In a specific example, the third-party application 366 (e.g., an application developed using the ANDROID^{™} or IOS^{™} software development kit [SDK] by an entity other than the vendor of the particular platform) may be mobile software running on a mobile operating system such as IOS^{™}, ANDROID^{™}, WINDOWS^{®} Phone, or another mobile operating system. In this example, the third-party application 366 can invoke the API calls 312 provided by the operating system 304 to facilitate functionality described herein.

Figure 4 illustrates a diagrammatic representation of a machine 400 in the form of a computer system within which a set of instructions may be executed for causing the machine 400 to perform any one or more of the methodologies discussed herein, according to an example embodiment. Specifically, Figure 4 shows a diagrammatic representation of the machine 400 in the example form of a computer system, within which instructions 416 (e.g., software, a program, an application, an applet, an app, or other executable code) for causing the machine 400 to perform any one or more of the methodologies discussed herein may be executed. For example, the instructions 416 may cause the machine 400 to execute the method 200 of Figure 2. Additionally, or alternatively, the instructions 416 may implement Figures 1-2 and so forth. The instructions 416 transform the general, non-programmed machine 400 into a particular machine 400 programmed to carry out the described and illustrated functions in the manner described. In alternative embodiments, the machine 400 operates as a standalone device or may be coupled (e.g., networked) to other machines. In a networked deployment, the machine 400 may operate in the capacity of a server machine or a client machine in a server-client network environment, or as a peer machine in a peer-to-peer (or distributed) network environment. The machine 400 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 416, sequentially or otherwise, that specify actions to be taken by the machine 400. Further, while only a single machine 400 is illustrated, the term "machine" shall also be taken to include a collection of machines 400 that individually or jointly execute the instructions 416 to perform any one or more of the methodologies discussed herein.

The machine 400 may include processors 410, memory 430, and I/O components 450, which may be configured to communicate with each other such as via a bus 402. In an example embodiment, the processors 410 (e.g., a central processing unit [CPU], a reduced instruction set computing [RISC] processor, a complex instruction set computing [CISC] processor, a graphics processing unit [GPU], a digital signal processor [DSP], an application-specific integrated circuit [ASIC], a radio-frequency integrated circuit [RFIC], another processor, or any suitable combination thereof) may include, for example, a processor 412 and a processor 414 that may execute the instructions 416. The term "processor" is intended to include multi-core processors that may comprise two or more independent processors (sometimes referred to as "cores") that may execute instructions 416 contemporaneously. Although Figure 4 shows multiple processors 410, the machine 400 may include a single processor 412 with a single core, a single processor 412 with multiple cores (e.g., a multi-core processor 412), multiple processors 412, 414 with a single core, multiple processors 412, 414 with multiple cores, or any combination thereof.

The memory 430 may include a main memory 432, a static memory 434, and a storage unit 436, each accessible to the processors 410 such as via the bus 402. The main memory 432, the static memory 434, and the storage unit 436 store the instructions 416 embodying any one or more of the methodologies or functions described herein. The instructions 416 may also reside, completely or partially, within the main memory 432, within the static memory 434, within the storage unit 436, within at least one of the processors 410 (e.g., within the processor's cache memory), or any suitable combination thereof, during execution thereof by the machine 400.

The I/O components 450 may include a wide variety of components to receive input, provide output, produce output, transmit information, exchange information, capture measurements, and so on. The specific I/O components 450 that are included in a particular machine will depend on the type of machine. For example, portable machines such as mobile phones will likely include a touch input device or other such input mechanisms, while a headless server machine will likely not include such a touch input device. It will be appreciated that the I/O components 450 may include many other components that are not shown in Figure 4. The I/O components 450 are grouped according to functionality merely for simplifying the following discussion, and the grouping is in no way limiting. In various example embodiments, the I/O components 450 may include output components 452 and input components 454. The output components 452 may include visual components (e.g., a display such as a plasma display panel [PDP], a light-emitting diode [LED] display, a liquid crystal display [LCD], a projector, or a cathode ray tube [CRT]), acoustic components (e.g., speakers), haptic components (e.g., a vibratory motor, resistance mechanisms), other signal generators, and so forth. The input components 454 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 450 may include biometric components 456, motion components 458, environmental components 460, or position components 462, among a wide array of other components. For example, the biometric components 456 may include components to detect expressions (e.g., hand expressions, facial expressions, vocal expressions, body gestures, or eye tracking), measure bio signals (e.g., blood pressure, heart rate, body temperature, perspiration, or brain waves), identify a person (e.g., voice identification, retinal identification, facial identification, fingerprint identification, or electroencephalogram-based identification), and the like. The motion components 458 may include acceleration sensor components (e.g., accelerometer), gravitation sensor components, rotation sensor components (e.g., gyroscope), and so forth. The environmental components 460 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 462 may include location sensor components (e.g., a Global Positioning System [GPS] receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 450 may include communication components 464 operable to couple the machine 400 to a network 480 or devices 470 via a coupling 482 and a coupling 472, respectively. For example, the communication components 464 may include a network interface component or another suitable device to interface with the network 480. In further examples, the communication components 464 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 470 may be another machine or any of a wide variety of peripheral devices (e.g., coupled via a USB).

Moreover, the communication components 464 may detect identifiers or include components operable to detect identifiers. For example, the communication components 464 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 464, such as location via Internet Protocol (IP) geolocation, location via Wi-Fi^{®} signal triangulation, location via detecting an NFC beacon signal that may indicate a particular location, and so forth.

The various memories (e.g., 430, 432, 434, and/or memory of the processor[s] 410) and/or the storage unit 436 may store one or more sets of instructions 416 and data structures (e.g., software) embodying or utilized by any one or more of the methodologies or functions described herein. These instructions (e.g., the instructions 416), when executed by the processor(s) 410, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 480 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 480 or a portion of the network 480 may include a wireless or cellular network, and the coupling 482 may be a Code Division Multiple Access (CDMA) connection, a Global System for Mobile communications (GSM) connection, or another type of cellular or wireless coupling. In this example, the coupling 482 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 416 may be transmitted or received over the network 480 using a transmission medium via a network interface device (e.g., a network interface component included in the communication components 464) and utilizing any one of a number of well-known transfer protocols (e.g., HTTP). Similarly, the instructions 416 may be transmitted or received using a transmission medium via the coupling 472 (e.g., a peer-to-peer coupling) to the devices 470. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 416 for execution by the machine 400, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A method comprising:
receiving, at a Large Language Model (LLM), a prompt;
assigning probabilities to a first plurality of different possible tokens based on the prompt;
selecting a first token based on values for one or more parameters for the first plurality of different possible tokens;
determining that the first token is not a trigger token;
assigning values to one or more parameters of a second plurality of different possible tokens based on the prompt and based on the first token;
selecting a second token based on the values for the one or more parameters for the second plurality of different possible tokens;
determining that the second token is a trigger token of a first type;
assigning values to one or more parameters of a third plurality of different possible tokens based on the prompt and based on the second token;
based on the determination that the second token is the trigger token of the first type, assigning a specific value to a parameter of any tokens in the third plurality of different possible tokens that are not in compliance with a first grammar uniquely associated with the first type and that also are not an end token;
selecting a third token based on the values for the one or more parameters of the third plurality of different possible tokens; and
returning the first token, second token, and third token as a response to the prompt.

2. The method of claim 1, wherein the one or more parameters comprise temperature.

3. The method of claim 1 or 2, wherein the one or more parameters comprise a frequency penalty.

4. The method of any one of the preceding claims, wherein the one or more parameters comprise a presence penalty.

5. The method of any one of the preceding claims, wherein the one or more parameters comprise maximum tokens.

6. The method of any one of the preceding claims, wherein the one or more parameters comprise probability, and wherein the specific value is a null probability value.

7. The method of claim 6, further comprising:
assigning probabilities to a fourth plurality of different possible tokens based on the prompt and based on the third token;
assigning a null probability value to any tokens in the third plurality of different possible tokens that are not in compliance with the first grammar and that also are not an end token;
selecting a fourth token based on the assigned probabilities for the fourth plurality of different possible tokens;
determining that the fourth token is an end token;
based on the determination that the second token is the end token, assigning probabilities to a fifth plurality of different possible tokens based on the prompt and based on the second token without determining compliance of any tokens with the first grammar; and
wherein the generating comprises generating the first token, second token, third token, fourth token, and fifth token as a response to the prompt.

8. The method of claim 7, further comprising:
assigning probabilities to a sixth plurality of different possible tokens based on the prompt and based on the fifth token;
selecting a sixth token based on the assigned probabilities for the sixth plurality of different possible tokens;
determining that the sixth token is a trigger token of a second type;
assigning probabilities to a seventh plurality of different possible tokens based on the prompt and based on the sixth token;
based on the determination that the sixth token is the trigger token of the second type, assigning a null probability value to any tokens in the seventh plurality of different possible tokens that are not in compliance with a second grammar uniquely associated with the second type and that also are not an end token;
selecting a seventh token based on the assigned probabilities for the seventh plurality of different possible tokens; and
wherein the generating comprises generating the first token, second token, third token, fourth token, fifth token, sixth token, and seventh token as a response to the prompt.

9. The method of any one of the preceding claims, wherein the response is an intermediate representation and the method further comprises:
passing the intermediate representation into a programmatic component to generate a final representation, the programmatic component validating the intermediate representation; and
converting the intermediate representation into the final representation.

10. The method of claim 9, wherein the final representation is compilable computer code.

11. The method of claim 10, wherein the compilable computer code is in a format that is at least partially proprietary.

12. The method of any one of the preceding claims, wherein the selecting the first token, the selecting the second token, and the selecting the third token are all performed in a non-deterministic manner.

13. A system comprising:
at least one hardware processor;
a computer-readable medium storing instructions that, when executed by the at least one hardware processor, cause the at least one hardware processor to perform operations according to a method of any one of claims 1 to 12.

14. A non-transitory machine-readable medium storing instructions which, when executed by one or more processors, cause the one or more processors to perform operations according to a method of any one of claims 1 to 12.
